# EUROPEAN PATENT APPLICATION

(11) **EP 3 840 090 A1**
(43) Date of publication of application: **23.06.2021**
(21) Application number: 19850346.8
(22) Date of filing: 06.08.2019
(51) Int. Cl.: H01M 4/58

(54) **SULFUR-BASED POSITIVE ELECTRODE ACTIVE MATERIAL FOR USE IN SOLID-STATE BATTERY, PREPARATION FOR MATERIAL, AND APPLICATIONS THEREOF**

(30) Priority: 17.08.2018 CN 201810939894
(71) Applicant: Institute of Physics, Chinese Academy of Sciences, Beijing 100190 (CN)
(72) Inventor: HUANG, Xuejie, Beijing 100190 (CN); YU, Hailong, Beijing 100190 (CN); ZHAN, Yuanjie, Beijing 100190 (CN); QI, Wenbin, Beijing 100190 (CN); ZHAO, Wenwu, Beijing 100190 (CN)
(74) Representative: Potter Clarkson
(86) International application number: PCT/CN2019/099427
(87) International publication number: WO 2020/034875

(57) **Abstract**

The present invention provides a sulfur-based positive electrode active material for use in a solid-state battery, comprising: 30-80 wt% of Li₂S, 10-40 wt% of one or more second lithium compounds selected from LiI, LiBr, LiNO₃, and LiNO₂, and 0-30 wt% of a conductive carbon material; a method for preparing the sulfur-based positive electrode active material, a positive electrode including the sulfur-based positive electrode active material, and a solid-state battery including the positive electrode. The sulfur-based positive electrode active material and the positive electrode provide a high specific capacity and an increased discharge voltage.

## Description

### Technical Field

The present invention belongs to the technical field of batteries, and particularly relates to a sulfur-based positive electrode active material for use in a solid-state battery, a preparation method and application thereof.

### Background Art

Lithium ion batteries are widely applied to the fields of information electronic products, electric vehicles and electric energy storage, which use a lithium-embedded material as a negative electrode and a lithium-including compound as a positive electrode. In recent years, with the rapid development of mobile electronic products, power automobiles and smart grids, higher requirements for battery safety and energy density have been imposed, and solid-state batteries with high safety and energy density have become the focus of research in the industry (J. Phys. Chem. C 2018, 122, 14383-14389).

A solid electrolyte capable of transmitting lithium ions is used in the solid-state battery to serve as the electrolyte in a lithium ion battery, so that the compactness and safety of the battery can be improved. However, the electrode materials and solid electrolytes in solid-state batteries transport lithium ions through the solid-solid interface, which requires the electrode materials to have high kinetic properties and low volume expansion, so it is an important research direction to find high specific energy positive electrode materials suitable for solid-state batteries (Journal of Power Sources 395 (2018), 414-429).

In commercial lithium ion batteries, a lithium-including compound is used as a positive electrode, which is usually an embedded positive electrode material, such as lithium cobaltate (LiCoO₂), lithium manganate (LiMn₂O₄), a ternary material (LiNiₓCo_{y}Mn_{1-x-y}O₂) and lithium iron phosphate (LiFePO₄), where the specific capacity is generally not higher than 200 mAh/g, and the specific energy is not higher than 900 Wh/kg. This type of positive electrodes typically operates at voltages up to 3.5-4.2 V.

Sulfide-based positive electrode materials have a high specific energy, which are typically conversion reaction positive electrodes, and are generally accompanied by a large volume expansion. Taking lithium sulfide (Li₂S) for example, the theoretical specific energy of which is as high as 2600 Wh/kg, and it is focused in the last decade. However, the voltage of Li-S batteries using Li₂S or S as the positive electrode is not high, and the average working voltage is lower than 2 V, which limits its application range. While other transition metal sulfides, such as FeS, Fe₂S₃, MoS₂ and NiS, all have average voltages below 1.8 V (ACS Appl. Mater. Interfaces 2018, 10, 21084-21090).

In order to obtain the same high specific energy when the working voltage drops, the battery needs more lithium ions to participate in the reaction, and to achieve the same specific energy requires more positive electrode materials to participate in the reaction, thereby increasing the volume effect of the electrode material, which is harmful to the battery cycle performance.

Therefore, increasing the working voltage of the sulfide positive electrode material can effectively improve the volume effect of the electrode material in a solid-state battery while increasing the specific energy of the battery, thereby increasing the cycle life of the solid-state battery. The increase in the working voltage also helps to expand the sulfide-based solid-state batteries in their application space.

### Summary of the Invention

In view of this, it is an object of the present invention to make up the defects existing in solid-state batteries at present by providing a sulfur-based positive electrode active material for use in a solid-state battery, which has a high specific capacity and an high operating voltage, and a preparation and application thereof.

The object of the present invention is achieved by the following technical solutions.

In one aspect, the present invention provides a sulfur-based positive electrode active material for a solid-state battery, comprising: 30-80 wt% of Li₂S, 10-40 wt% of one or more second lithium compounds selected from LiI, LiBr, LiNO₃, and LiNO₂, and 0-30 wt% of a conductive carbon material.

The sulfur-based positive electrode active material provided according to the present invention, wherein the sulfur-based positive electrode active material includes 30-70 wt%, preferably 60-70 wt%, for example 70 wt% of Li₂S.

The sulfur-based positive electrode active material provided according to the present invention, wherein the sulfur-based positive electrode active material includes 15-20 wt% of a second lithium compound.

The sulfur-based positive electrode active material provided according to the present invention, where the second lithium compound is/are LiI and/or LiNO₂.

The sulfur-based positive electrode active material provided according to the present invention, where the sulfur-based positive electrode active material includes 10-30 wt%, preferably 10-15 wt% of a conductive carbon material.

Thesulfur-based positive electrode active material provided according to the present invention, wherein the conductive carbon material is one or more selected from carbon black, carbon nanotubes, carbon nanofibers and graphene.

The sulfur-based positive electrode active material according to a preferred embodiment of the present invention, wherein Li₂S has a content of 60-70 wt%, and the second lithium compound has a content of 15-20 wt%.

The sulfur-based positive electrode active material according to a preferred embodiment of the present invention, wherein the weight ratio of Li₂S, the second lithium compound, and the conductive carbon material in the sulfur-based positive electrode active material are 70: (15-20): (10-15).

The sulfur-based positive electrode active material provided according to the present invention, wherein the sulfur-based positive electrode active material is prepared by a method including mixing Li₂S, the second lithium compound and the conductive carbon material via dry ball milling or wet ball milling.

In another aspect, the present invention also provides a method for preparing the sulfur-based positive electrode active material, comprising the step of: mixing Li₂S, the second lithium compound and the conductive carbon material via dry ball milling or wet ball milling.

The method provided according to the present invention, wherein the mixing via dry ball milling or wet ball milling is carried out under an inert atmosphere. In some embodiments, the inert atmosphere is a nitrogen atmosphere or an argon atmosphere.

The method provided according to the present invention, wherein the mixing via dry ball milling or wet ball milling is carried out at a rotation speed of 150-500 revolutions per minute (rpm), for example 300 rpm, for 1-24 hours, preferably 6-18 hours.

The method provided according to the present invention, when mixing via wet ball milling, absolute ethyl alcohol is used as a solvent with an amount of preferably 5-10 wt% of the sulfur-based positive electrode active material.

The method provided according to the present invention, when mixing via wet ball milling, the method further includes the step of: drying the mixture obtained by the mixing via wet ball milling under vacuum at 50-80°C.

In yet another aspect, the present invention provides a positive electrode for a solid-state battery, wherein the positive electrode comprises a composition comprising 60-90 wt% of the sulfur-based positive electrode active material, 0-20 wt% of a conductive additive, 0-40 wt% of a solid electrolyte, and 0-20 wt% of a binder.

The positive electrode provided according to the present invention, wherein the sulfur-based positive electrode active material has a content of 60-80 wt% of in the composition.

The positive electrode provided according to the present invention, wherein a conductive additive may be additionally added to the composition.

In some embodiments, examples of suitable conductive additives include, but are not limited to: carbon black, carbon nanotubes, carbon nanofibers and graphene.

The positive electrode provided according to the present invention, wherein the conductive additive has a content of 10-20 wt% in the composition.

The positive electrode provided according to the present invention, wherein a solid electrolyte may be added to the composition.

In some embodiments, examples of suitable solid electrolytes include, but are not limited to: Li₂S-P₂S₅-GeS₂, Li_{1.5}Al_{0.5}Ti_{1.5}(PO₄)₃, and Li₇La₃Zr₂O₁₂.

The positive electrode provided according to the present invention, wherein the solid electrolyte has a content of 10-30 wt%, preferably 10-20 wt% in the composition.

The positive electrode provided according to the present invention, wherein a binder may be used in the composition.

In some embodiments, examples of suitable binders include, but are not limited to: polyvinylidene fluoride (PVDF), polytetrafluoroethylene (PTFE), sodium carboxymethylcellulose (CMC) and styrene-butadiene rubber (SBR).

The positive electrode provided according to the present invention, wherein the binder has a content of 0-10 wt% in the composition.

The positive electrode provided according to the present invention, wherein the positive electrode further includes a current collector.

The positive electrode provided according to the present invention, wherein the positive electrode can be prepared by a method known in the art.

In some embodiments, the positive electrode can be prepared by a method including the step of: tableting the components of the composition. In other embodiments, the positive electrode can be prepared by a method including the steps of: preparing the components of the composition into a slurry and coating or printing the slurry onto a current collector.

The positive electrode provided according to the present invention, wherein the current collector is aluminum foil.

In yet another aspect, the present invention also provides a solid state battery, comprising the aforesaid positive electrode, a solid electrolyte sheet, and a negative electrode.

The solid-state battery provided according to the present invention, wherein the solid electrolyte sheet is composed of one or more selected from Li₂S-P₂S₅-GeS₂, Li_{1.5}Al_{0.5}Ti_{1.5}(PO₄)₃, and Li₇La₃Zr₂O₁₂.

The solid-state battery provided according to the present invention, where the negative electrode is a metal lithium sheet or other lithium storage negative electrode material. In the present invention, the other lithium storage negative electrode materials may be conventional negative materials in the art, and the present invention is not particularly limited thereto.

The solid-state battery provided according to the present invention, wherein the solid-state battery is a solid-state lithium secondary battery.

Compared with the prior art, the present invention has the following advantages:
(1) The sulfur-based positive electrode active material and the positive electrode provided by the present invention maintain the advantages of high positive electrode specific capacity of lithium sulfide, and simultaneously improve battery discharge voltage. Without wishing to be bound by theory, it is believed that, in the sulfur-based positive electrode active material according to the present invention, by selecting Li₂S and adding a second lithium compound such as LiI, LiBr, LiNO₃ or LiNO₂, an electron withdrawing group having high electronegativity may be formed during charging, thereby the discharge voltage of the battery increases. In addition, the introduction of the second lithium compound further increases the ion conductivity of the positive electrode, and improves the catalytic effect on the decomposition of lithium sulfide and the lithiation of sulfur, thereby improving the specific capacity of the electrode material.
(2) The sulfur-based positive electrode active material of the present invention includes a large amount of lithium. When the battery is charged for the first time, the positive electrode is subjected to lithium removal, the solid electrode does not generate volume expansion that causes electrode deformation but forms pores. The structure recovers during discharge, and the cycle performance is excellent.

### Brief Description of the Drawings

The embodiments of the present invention will be described below in conjunction with the accompanying drawings, where:
FIG. 1 shows a voltage-specific capacity graph of a solid-state battery using the sulfur-based positive electrode active material of Example 1 during charging-discharging for the first time and charging-discharging for the second time;
FIG. 2 shows a cyclic graph of a solid-state battery using the sulfur-based positive electrode active material of Example 1;
FIG. 3 shows a voltage-specific capacity graph of a solid-state battery using the positive electrode active material of Comparative Example 1 during charging-discharging for the first time and charging-discharging for the second time;
FIG. 4 shows a voltage-specific capacity graph of a solid-state battery using the sulfur-based positive electrode active material of Example 9 during charging-discharging for the first time and charging-discharging for the second time;
FIG. 5 shows a lateral scanning electron microscope photograph of a solid-state battery prepared using the sulfur-based positive electrode active material of Example 1, before charge/discharge and after two charge/discharge cycles; and
FIG. 6 shows a voltage-specific capacity graph of a solid-state battery using the positive electrode active material of Comparative Example 2 during a first charge/discharge cycle and a second charge/discharge cycle.

### Detailed Description of the Invention

The present invention will be further described in detail below in conjunction with specific embodiments, and the examples given are only to illustrate the present invention, but not to limit the scope of the present invention.

### Examples 1-9

The preparation method of the sulfur-based positive electrode active materials includes the following steps:
(1) Li₂S, a second lithium compound and a conductive carbon material were mixed at a certain mass ratio under an argon atmosphere with a moisture content lower than 0.5 ppm. The obtained mixture was mixed with ball milling beads, then transferred into a ball milling tank, and dry ball milling or wet ball milling was carried out under the argon atmosphere with a moisture content lower than 0.5 ppm. The parameters of dry ball milling and wet ball milling are as follows: a rotating speed of 300 revolutions per minute, a time of 12 hours, and absolute ethyl alcohol accounting for 5 wt% of the sulfur-based positive electrode active material was added into the wet ball milling to serve as a solvent.
(2) A sample was taken out under an argon atmosphere with a moisture content lower than 0.5 ppm, followed by filtering through a screen to remove ball milling beads, and mixing by adopting dry ball milling to obtain a sulfur-based positive electrode active material. During the process of mixing via wet ball milling, the obtained mixture material was filtered through a screen, and then was subjected to vacuum drying for 12 hours at 60°C to obtain a sulfur-based positive electrode active material.

The starting materials used in Examples 1-9 were as follows:

| | |
|---|---|
| Carbon nanotubes | Available from Nanjing XFNANO, Industrial grade carbon nanotubes |
| Graphene | Available from Nanjing XFNANO, Chemical process Graphene |
| Carbon nanofiber | Available from Toray, Japan under the trade name KCF-100 |

The composition and process of the sulfur-based positive electrode active materials prepared in Examples 1-9 were shown in Table 1.

### Comparative Example 1

A positive electrode active material without a second lithium compound was prepared in the same manner as in Example 1, and the composition and related process thereof were shown in Table 1.

### Comparative Example 2

A positive electrode active material using lithium iron phosphate as a second lithium compound was prepared in the same manner as in Example 1, and the composition and related process thereof were shown in Table 1.

**Table 1 Composition, ratio and mixing mode of the positive electrode active material**

| | **Li₂S/second lithium compound/conductive carbon material (weight ratio)** | **Second lithium compound** | **Conductive carbon material** | **Mixing mode** |
|---|---|---|---|---|
| Example 1 | 70:20:10 | Lithium iodide | Carbon nanotubes | Dry ball milling |
| Example 2 | 70:20:10 | Lithium iodide | Carbon nanotubes | Dry ball milling |
| Example 3 | 70:20:10 | Lithium iodide | Carbon nanotubes | Dry ball milling |
| Example 4 | 70:30:0 | Lithium iodide | Carbon nanotubes | Dry ball milling |
| Example 5 | 60:30:10 | Lithium iodide | Graphene | Dry ball milling |
| Example 6 | 70:15:15 | Lithium iodide | Carbon nanotubes | Wet ball milling |
| Example 7 | 70:20:10 | Lithium iodide | Carbon nanotubes | Dry ball milling |
| Example 8 | 30:40:30 | Lithium iodide | Carbon nanotubes | Dry ball milling |
| Example 9 | 70:20:10 | Lithium nitrite | Carbon nanotubes | Dry ball milling |
| Comparative Example 1 | 90:0:10 | Lithium iodide | Carbon nanofibers | Dry ball milling |
| Comparative Example 2 | 70:20:10 | Lithium iron phosphate | Carbon nanotubes | Dry ball milling |

### Preparation and Performance Test of Solid State Battery

### 1. Preparation of positive electrode

The sulfur-based positive electrode active materials prepared in Examples 1-9 and the positive electrode active materials prepared in Comparative Examples 1-2 were used as positive electrode active materials, respectively, to prepare positive electrode materials. The positive electrode active material, solid electrolyte and conductive additive were weighed and mixed at a weight ratio of 7:2:1 under an argon atmosphere with a moisture content of less than 0.5 ppm, and the obtained mixture was mixed with ball milling beads, then transferred to a ball milling tank, and dry ball milling was carried out under an argon atmosphere with a moisture content lower than 0.5 ppm to obtain a positive electrode material. The dry ball milling parameters were as follows: a rotation speed was 150 rpm and time was 2 hours.

The obtained positive electrode material was molded under a pressure of 20 MPa to prepare a positive electrode sheet with a weight of 10 mg and a diameter of 4 mm

The starting materials for preparing the positive electrode were as follows:

| **Conductive additives** | **Source** |
|---|---|
| Carbon nanotubes | Available from Nanjing XFNANO, Industrial grade carbon nanotubes |
| Graphene | Available from Nanjing XFNANO, Chemical process Graphene |
| Carbon nanofiber | Available from Toray, Japan under the trade name KCF-100 |

### 2. Assembling battery

The battery was assembled in an argon glove box with a moisture content of less than 0.5 ppm.

A solid electrolyte sheet with a thickness of 300 µm was molded under a pressure of 20 MPa.

A secondary solid-state battery was prepared by cold-pressing and assembling a positive sheet with a diameter of 4 mm, a solid electrolyte plate with a thickness of 300 µm and a metal lithium foil with a thickness of 80 µm under a pressure of 20 MPa using a mould.

### 3. Performance Test

The secondary solid-state battery was charged and discharged at constant current using a CT2001A type charge and discharge tester available from Wuhan LAND Electronic Co., Ltd., the cycle test was carried out at a rate of 0.05 C under a test temperature of 60°C. The voltage range was 1.5-3.6 V (vs. Li/Li⁺), and the results were shown in Table 2.

**Table 2 Assembly and performance of secondary solid state batteries**

| **EXAMPLES** | **Conductive additives** | **Solid state electrolyte** | **Discharge specific capacity of positive electrode (mAh/g)** |
|---|---|---|---|
| Example 1 | Carbon nanotubes | Li₂S-P₂S₅-GeS₂ | 883 |
| Example 2 | Carbon nanotubes | Li₂S-P₂S₅-GeS₂ | 822 |
| Example 3 | Carbon nanotubes | Li₇La₃Zr₂O₁₂ | 782 |
| Example 4 | Carbon nanotubes | Li₂S-P₂S₅-GeS₂ | 106 |
| Example 5 | Graphene | Li₂S-P₂S₅-GeS₂ | 462 |
| Example 6 | Carbon nanotubes | Li₂S-P₂S₅-GeS₂ | 865 |
| Example 7 | Carbon nanotubes | Li_{1.5}Al_{0.5}Ti_{1.5}(PO₄)₃ | 512 |
| Example 8 | Carbon nanotubes | Li₂S-P₂S₅-GeS₂ | 412 |
| Example 9 | Carbon nanotubes | Li₂S-P₂S₅-GeS₂ | 762 |
| Comparative Example 1 | Carbon nanofibers | Li₂S-P₂S₅-GeS₂ | 469 |
| Comparative Example 2 | Carbon nanotubes | Li₂S-P₂S₅-GeS₂ | 351 |

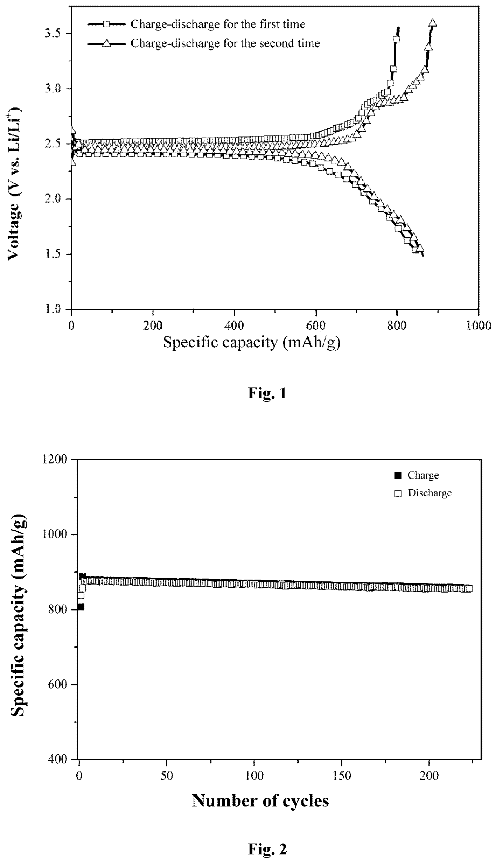

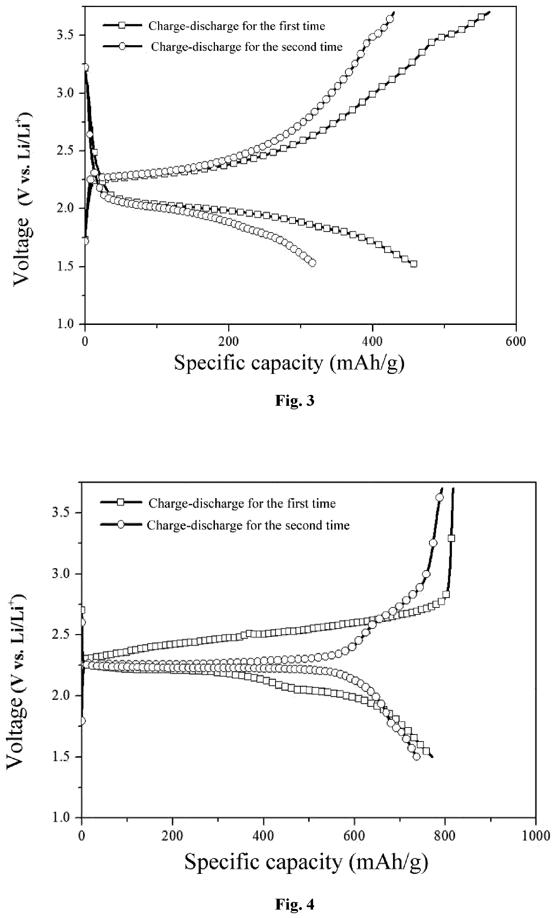

FIG. 1 showed a charge/discharge curve of a solid-state battery using the sulfur-based positive electrode active material of Example 1. As can be seen from FIG. 1, during a first charge cycle , lithium sulfide decomposed firstly and then lithium iodide decomposed, and the decomposition voltage plateau of lithium iodide was high. During a first discharge cycle, there was no discharge plateau of lithium iodide, but the discharge plateau of lithium sulfide was increased; during a second charge/discharge cycle, there was also a high decomposition voltage plateau of lithium iodide, indicating the electron-withdrawing effect of highly electronegative iodine ions. Meanwhile, as can be seen from FIG. 1, the first discharge plateau of the solid-state battery using the sulfur-based positive electrode active material of Example 1 was located at 2.31-2.42 V (vs. Li/Li⁺), which is significantly higher than that of the Li-S battery (see FIG. 3).

FIG. 2 showed a 223-cycle curve of a solid-state battery using the sulfur-based positive electrode active material of Example 1. As can be seen from FIG. 2, the solid-state battery using the sulfur-based positive electrode active material of Example 1 had excellent cycle performance.

FIG. 3 showed a voltage-specific capacity graph of a solid-state battery using the positive electrode active material of Comparative Example 1 during charging-discharging for the first time and charging-discharging for the second time. As can be seen from FIG. 3, the discharge plateau of the Li-S battery using the positive electrode active material of Comparative Example 1 was located at 1.71-2.13 V (vs. Li/Li⁺).

FIG. 4 showed a charge/discharge curve of a solid-state battery using the sulfur-based positive electrode active material of Example 9. As can be seen from FIG. 4, the solid-state battery using the sulfur-based positive electrode active material of Example 9 also had an elevated first discharge plateau located at 2.26-2.35 V (vs. Li/Li⁺).

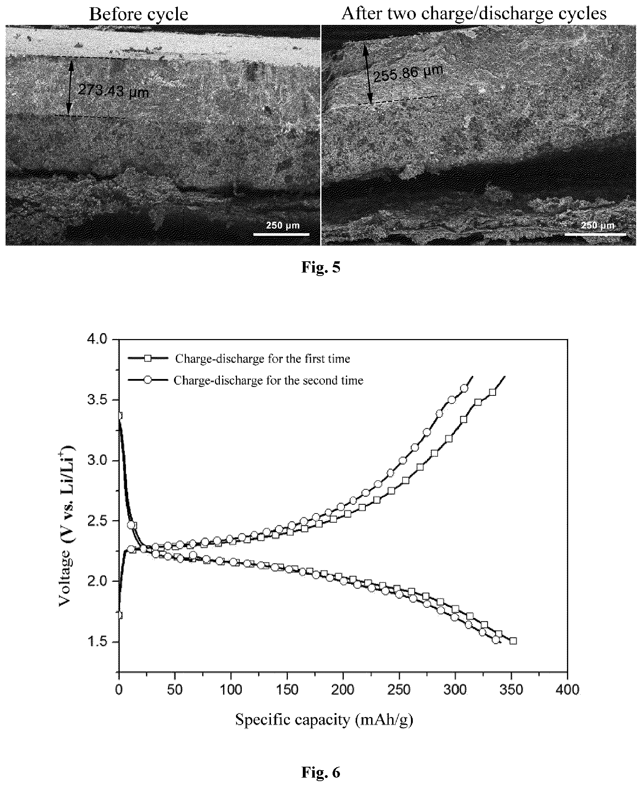

FIG. 5 showed a volumetric deformation of a positive electrode of a solid-state battery using the sulfur-based positive electrode active material of Example 1 after two charge/discharge cycles. As can be seen from FIG. 5, during the use of the solid-state battery positive electrode including the lithium-sulfur-based positive electrode active material, the positive electrode was subjected to lithium removal when the battery was charged, the solid electrode did not generate volume expansion that causes electrode deformation but formed pores, and the structure was recovered during discharge. A positive electrode using the sulfur-based positive electrode active material of Example 1 had a volume change rate of only 6.42% after two cycles.

Further, FIG. 6 showed a voltage-specific capacity graph of the solid-state battery using the positive electrode active material of Comparative Example 2 during a first charge/discharge cycle and a second charge/discharge cycle. As can be seen from FIG. 6, the discharge plateau of the battery to which lithium iron phosphate was added as a second lithium compound was located at 1.81-2.11 V (vs. Li/Li⁺), and there was no elevation compared to Comparative Example 1, which means that simply mixing the positive electrode material having a high discharge plateau with lithium sulfide did not significantly improve the performance of the solid-state battery, especially the discharge plateau of the solid-state lithium sulfur battery.

## Claims

1. A sulfur-based positive electrode active material for a solid-state battery, comprising: 30-80 wt% of Li₂S, 10-40 wt% of one or more second lithium compounds selected from LiI, LiBr, LiNO₃, and LiNO₂, and 0-30 wt% of a conductive carbon material.

2. The sulfur-based positive electrode active material according to claim 1, wherein the sulfur-based positive electrode active material comprises 30-70 wt%, preferably 60-70 wt%, for example 70 wt% of Li₂S.
preferably, the sulfur-based positive electrode active material comprises 15-20 wt% of a second lithium compound; more preferably, the second lithium compound is LiI and/or LiNO₂;
preferably, the sulfur-based positive electrode active material comprises 10-30 wt%, preferably 10-15 wt% of a conductive carbon material;
preferably, the conductive carbon material is one or more selected from carbon black, carbon nanotubes, carbon nanofibers and graphene.

3. The sulfur-based positive electrode active material according to claim 1 or 2, wherein Li₂S has a content of 60-70 wt%, and the second lithium compound has a content of 15-20 wt%.
preferably, the weight ratio of Li₂S, the second lithium compound, and the conductive carbon material in the sulfur-based positive electrode active material is 70: (15-20): (10-15).

4. A method for preparing the sulfur-based positive electrode active material according to any one of claims 1-3, comprising the step of: mixing Li₂S, the second lithium compound and the conductive carbon material via dry ball milling or wet ball milling.

5. The method according to claim 4, wherein the mixing via dry ball milling or wet ball milling is carried out under an inert atmosphere such as a nitrogen atmosphere or an argon atmosphere;
preferably, the mixing via dry ball milling or wet ball milling is carried out at a rotation speed of 150-500 rpm, for example 300 rpm, for 1-24 hours, preferably 6-18 hours;
preferably, in the mixing via wet ball milling, absolute ethyl alcohol is used as a solvent with an amount of preferably 5-10 wt% of the sulfur-based positive electrode active material;
preferably, when using the mixing via wet ball milling , the method further comprises the step of: drying the mixture obtained by the mixing via wet ball milling under vacuum at 50-80°C.

6. A positive electrode for a solid-state battery, comprising a composition comprising 60-90 wt% of the sulfur-based positive electrode active material of any one of claims 1-3, 0-20 wt% of a conductive additive, 0-40 wt% of a solid electrolyte, and 0-20 wt% of a binder.

7. The positive electrode according to claim 6, wherein the sulfur-based positive electrode active material has a content of 60-80 wt% in the composition;
preferably, the conductive additive is one or more selected from carbon black, carbon nanotubes, carbon nanofibers and graphene;
preferably, the conductive additive has a content of 10-20 wt% in the composition;
preferably, the solid electrolyte is one or more selected from Li₂S-P₂S₅-GeS₂, Li_{1.5}Al_{0.5}Ti_{1.5}(PO₄)₃, and Li₇La₃Zr₂O₁₂;
preferably, the solid electrolyte has a content of 10-30 wt%, preferably 10-20 wt% in the composition;
preferably, the binder is one or more selected from polyvinylidene fluoride, polytetrafluoroethylene, sodium carboxymethylcellulose and styrene-butadiene rubber;
preferably, the binder has a content of 0-10 wt% in the composition.

8. The positive electrode according to claim 6 or 7, wherein the positive electrode further comprises a current collector such as an aluminum foil.

9. A solid-state battery comprising the positive electrode according to any one of claims 6-8, a solid electrolyte sheet, and a negative electrode.

10. The solid-state battery according to claim 9, wherein the solid electrolyte sheet is composed of one or more selected from Li₂S-P₂S₅-GeS₂, Li_{1.5}Al_{0.5}Ti_{1.5}(PO₄)₃, and Li₇La₃Zr₂O₁₂;
preferably, the solid-state battery is a solid-state lithium secondary battery.
